(19)

Europäisches
Patentamt
European
Patent Office
Office européen
des brevets

(11) **EP 2 562 278 A1**

(12) **EUROPEAN PATENT APPLICATION**
published in accordance with Art. 153(4) EPC

(43) Date of publication:
**27.02.2013 Bulletin 2013/09**

(21) Application number: **11771875.9**

(22) Date of filing: **07.04.2011**

(51) Int Cl.:
*C22C 1/08* (2006.01)      *C22C 21/00* (2006.01)
*C25D 5/56* (2006.01)      *H01G 9/016* (0000.00)
*H01M 4/66* (2006.01)      *H01M 4/80* (2006.01)

(86) International application number:
**PCT/JP2011/058782**

(87) International publication number:
**WO 2011/132539 (27.10.2011 Gazette 2011/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2010   JP 2010098335**

(71) Applicant: **Sumitomo Electric Industries, Ltd.
Osaka-shi, Osaka 541-0041 (JP)**

(72) Inventors:
• **HOSOE, Akihisa
Osaka-shi
Osaka 554-0024 (JP)**
• **INAZAWA, Shinji
Osaka-shi
Osaka 554-0024 (JP)**
• **MAJIMA, Masatoshi
Osaka-shi
Osaka 554-0024 (JP)**

• **NITTA, Koji
Osaka-shi
Osaka 554-0024 (JP)**
• **SAKAI, Shoichiro
Osaka-shi
Osaka 554-0024 (JP)**
• **AWAZU, Tomoyuki
Itami-shi
Hyogo 664-0016 (JP)**
• **OKUNO, Kazuki
Itami-shi
Hyogo 664-0016 (JP)**

(74) Representative: **Setna, Rohan P.
Boult Wade Tennant
Verulam Gardens
70 Gray's Inn Road
London WC1X 8BT (GB)**

(54) **METHOD FOR PRODUCING ALUMINUM STRUCTURE AND ALUMINUM STRUCTURE**

(57)      There is provided a method for producing an aluminum structural body, including an electrical conduction treatment of forming an electrically conductive layer made of aluminum on a surface of a resin molded body and a plating process of plating the resin molded body subjected to the electrical conduction treatment with aluminum in a molten salt bath. Even with a porous resin molded body having a three-dimensional network structure, the method allows the surface of the porous resin molded body to be plated with aluminum, thus forming a high-purity aluminum structural body having a uniform thick film. Porous aluminum having a large area is also provided.

FIG. 2

**EP 2 562 278 A1**

**Description**

Technical Field

The present invention relates to a method for forming an aluminum structural body on a resin surface by aluminum plating and, more particularly, to an aluminum structural body that can be suitably used as a porous metal body in applications, such as various filters and battery electrodes, and a method for producing the aluminum structural body.

Background Art

Porous metal bodies having a three-dimensional network structure have been used in a wide range of applications, such as various filters, catalyst supports, and battery electrodes. For example, Celmet (produced by Sumitomo Electric Industries, Ltd., registered trademark) made of nickel has been used as an electrode material for batteries, such as nickel-hydrogen batteries and nickel-cadmium batteries. Celmet is a porous metal body having continuous pores and characteristically has a higher porosity (90% or more) than other porous bodies, such as metal non-woven fabrics. Celmet can be produced by forming a nickel layer on a surface of the skeleton of a porous resin having continuous pores, such as urethane foam, decomposing the resin expansion molded body by heat treatment, and reducing the nickel. The nickel layer can be formed by performing a conductive treatment of applying a carbon powder to the surface of the skeleton of the resin expansion molded body and then depositing nickel by electrodeposition.

Aluminum has excellent characteristics, such as conductive property, corrosion resistance property, and lightweight. For use in batteries, for example, aluminum foil to which an active material, such as lithium cobalt oxide, is applied has been used as a positive electrode of lithium-ion batteries. In order to increase the capacity of a positive electrode, an aluminum body can be processed into a porous body having a large surface area, and the inside of the aluminum body can be filled with an active material. This allows the active material to be utilized even in an electrode having a large thickness and improves the active material availability ratio per unit area.

As a method for producing porous aluminum, Patent Literature 1 describes a method for subjecting a plastic substrate having an inner continuous space and a three-dimensional network to an aluminum vapor deposition process by an arc ion plating method to form a metallic aluminum layer having a thickness in the range of 2 to 20 $\mu$m. Patent Literature 2 describes a method for forming a porous metal body, including forming a film made of a metal (such as copper) on the skeleton of a resin expansion molded body having a three-dimensional network structure, the metal having an ability to form an eutectic alloy at a temperature of the melting point of aluminum or less, applying an aluminum paste to the film, and performing heat treatment in a non-oxidizing atmosphere at a temperature of 550°C or more and 750°C or less to evaporate the organic constituent (resin foam) and sinter the aluminum powder.

Since aluminum has high chemical affinity to oxygen and a lower electric potential than hydrogen, the electrodeposition in a plating bath containing an aqueous solution is difficult to perform in aluminum plating. Aluminum electrodeposition has been studied in a plating bath containing a non-aqueous solution, in particular a plating bath containing an organic solvent. For example, as a technique for plating a metal surface with aluminum, Patent Literature 3 discloses an aluminum electrodeposition method characterized in that a low melting composition, which is a blend melt of an onium halide and an aluminum halogenide, is used in a plating bath, and aluminum is deposited on a cathode while the water content of the plating bath is maintained at 2% by weight or less.

Citation List

Patent Literature

PTL 1: Japanese Patent No. 3413662
PTL 2: Japanese Unexamined Patent Application Publication No. 8-170126
PTL 3: Japanese Patent No. 3202072

Summary of Invention

Technical Problem

In accordance with the method described in Patent Literature 1, porous aluminum having a thickness in the range of 2 to 20 $\mu$m can be produced. However, it is difficult to produce a large area by the gas phase method and, depending on the thickness or porosity of a substrate; it is difficult to form a layer having a uniform interior. There are additional problems of a low rate of formation of the aluminum layer and high producing costs because of expensive installation. Furthermore, the formation of a thick film may cause cracking in the film or falling of aluminum. In accordance with the method described in Patent Literature 2, unfortunately, a layer that forms an eutectic alloy with aluminum is formed instead of a high-purity aluminum layer. Although an aluminum electrodeposition method is known, plating of only a metal surface is possible, and there is no known method for electrodeposition on a resin surface, in particular electrodeposition on the surface of a porous resin molded body having a three-dimensional network structure. This is probably influenced by the dissolution of a porous resin in a plating bath and other problems.

Accordingly, it is an object of the present invention to provide a method for forming a high-purity aluminum structural body, including performing aluminum plating on the surface of a resin molded body, in particular even a porous resin molded body having a three-dimensional network structure, to form a uniform thick film, and a method for producing porous aluminum having a large area.

Solution to Problem

In order to solve the problems described above, the present inventors have arrived at a method for aluminum electrodeposition of a surface of a resin molded body made of polyurethane, melamine, or the like. The present invention provides a method for producing an aluminum structural body, including a electrical conduction treatment of forming an electrically conductive layer made of aluminum on a surface of a resin molded body and a plating process of plating the resin molded body subjected to the electrical conduction treatment with aluminum in a molten salt bath (the first invention of the present application). As described above, although aluminum plating has been performed on metal surfaces, electrodeposition of resin molded body surfaces has not been considered. The present invention is characterized in that making a resin molded body surface be electrically conductive (conductive treatment) was found to make it possible to perform aluminum plating in a molten salt bath. Furthermore, conductive treatment performed by forming an electrically conductive layer made of aluminum can produce an aluminum structural body substantially free of metals other than aluminum.

Since aluminum can easily react with oxygen, a thin oxide film tends to be formed on a surface of an electrically conductive layer made of aluminum. The oxide film reduces plating adhesion and therefore results in poor plating. Thus, it is preferable to provide an anode electrolysis process of performing electrolysis treatment using the electrically conductive layer as an anode between the electrical conduction treatment and the plating process (the second invention of the present application). The anode electrolysis treatment can melt and remove an oxide film formed on the surface of the electrically conductive layer in the electrical conduction treatment, allowing satisfactory aluminum plating in a molten salt.

Preferably, the resin molded body subjected to the electrical conduction treatment is transported between the electrical conduction treatment and the plating process without being exposed to an oxidizing atmosphere (the third invention of the present application). This allows satisfactory aluminum plating in a molten salt without oxidation of the electrically conductive layer.

The electrical conduction treatment may be a process of depositing aluminum on the surface of the resin molded body by a gas phase method (the fourth invention of the present application). The electrical conduction treatment may also be a process of dipping the resin molded body in a coating material containing aluminum to deposit aluminum on the resin molded body (the fifth invention of the present application). Both of these methods allow the produce of a structure substantially composed of aluminum as a metal without the contamination of metals other than aluminum.

Such a process allows the formation of a uniform thick aluminum layer on a surface of a complicated skeleton structure, in particular a porous resin article having a three-dimensional network structure (the sixth invention of the present application). The resin molded body is preferably made of urethane or melamine, with which a porous resin article having a high porosity can be produced (the seventh invention of the present application).

An aluminum structural body that includes a resin molded body having a metal layer on a surface thereof is produced through these processes (the eleventh invention of the present application). Depending on the application, such as a filter or a catalyst support, the aluminum structural body may be directly used as a resin-metal composite. In order to use a metal structure without resin owing to constraints resulting from the usage environment, the resin may be removed (the eighth invention of the present application).

An aluminum structural body produced by one of the methods described above includes an aluminum layer having a thickness in the range of 1 to 100 μm as a metal layer, wherein the whole metal layer without the resin has an aluminum purity of 99.0% or more and a carbon content of 1.0% or less and contains inevitable impurities as the balance (the tenth invention of the present application). The carbon content is measured by an infrared absorption method after combustion in a high-frequency induction furnace in accordance with Japan Industrial Standard G1211. The aluminum purity is measured with an inductively-coupled plasma emission spectrometer after the aluminum structural body has been dissolved in nitromuriatic acid.

When a porous resin having a three-dimensional network structure is used as the resin, the aluminum structural body thus produced includes an aluminum layer having a tubular skeleton structure and forming a porous body having generally contiguous pores (the twelfth invention of the present application).

An aluminum structural body can also be produced in which the skeleton structure has almost triangular sections, and the aluminum layer has a larger thickness at the vertexes of each of the triangular sections than at the middle of each side of the triangular sections (the thirteenth invention of the present application).

When a urethane foam or a melamine foam having a three-dimensional network structure is used as the porous resin molded body, the skeleton of the network structure generally has triangular sections. The term "triangular", as used herein, has no stringent definition and refers to a shape having approximately three vertexes and three curved lines as the sides. Thus, the shape of the aluminum structural body formed by plating also has an almost triangular skeleton. As an example of the conductive treatment method, the deposition of aluminum by a gas phase method will be described below. An electrically conductive layer having a relatively uniform thickness can be formed by a gas phase method. The conductivity of the electrically conductive layer is substantially constant at all positions on each of the triangular sections. In aluminum plating under such conditions, an electric field is concentrated at the corners (the vertexes of a triangular section), resulting in a greater thickness at the vertexes than at the middle of each side of the triangular section. Thus, the shape described above can be achieved. Such a shape can advantageously increase the strength of the tubular skeleton structure and improve the retention capacity of an active material in battery electrodes and other applications.

Advantageous Effects of Invention

The present invention can provide a method for performing aluminum plating on the surface of a resin molded body, in particular the surface of a porous resin molded body having a three-dimensional network structure, and forming a high-purity, large-area aluminum structural body having a substantially uniform and large thickness. The present invention can also provide an aluminum structural body.

Brief Description of Drawings

[Fig. 1] Figure 1 is a flow chart of a process of producing an aluminum structural body according to the present invention.

[Fig. 2] Figure 2 shows schematic cross-sectional views of a process of producing an aluminum structural body according to the present invention.

[Fig. 3] Figure 3 is an enlarged photograph of a surface of the structure of a urethane foam as an example of a porous resin molded body.

[Fig. 4] Figure 4 is a schematic view of a cross-section of the skeleton of porous aluminum.

[Fig. 5] Figure 5 is an explanatory view of a continuous aluminum plating process utilizing molten salt plating.

[Fig. 6] Figure 6 is a schematic cross-sectional view of a structure in which porous aluminum is applied to a molten salt battery.

[Fig. 7] Figure 7 is a schematic cross-sectional view of a structure in which porous aluminum is applied to an electrical double layer capacitor.

[Fig. 8] Figure 8 is a scanning electron microscope (SEM) photograph of a cross-section of porous aluminum.

Description of Embodiments

Embodiments of the present invention will be described below in which a representative example is a process of producing porous aluminum. Throughout the reference figures, like numerals designate like parts. The dimensions in the figures are not necessarily consistent with their descriptions. The present invention is defined by the appended claims rather than by these embodiments. All modifications that fall within the scope of the claims and the equivalents thereof are intended to be embraced by the claims.

(Process of Producing Aluminum structural body)

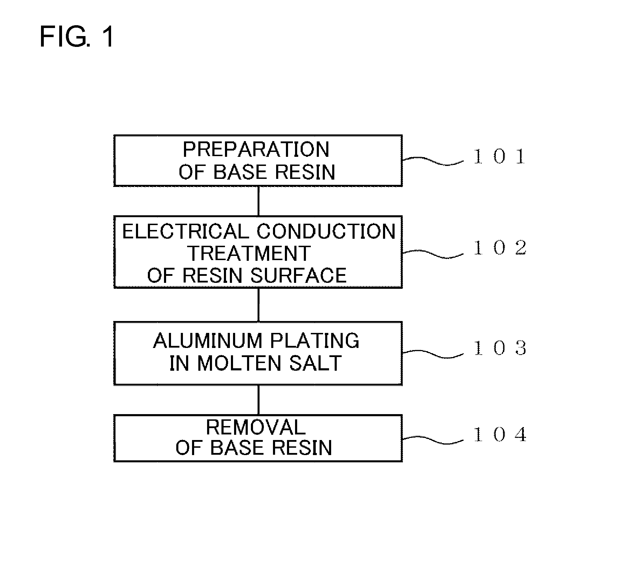

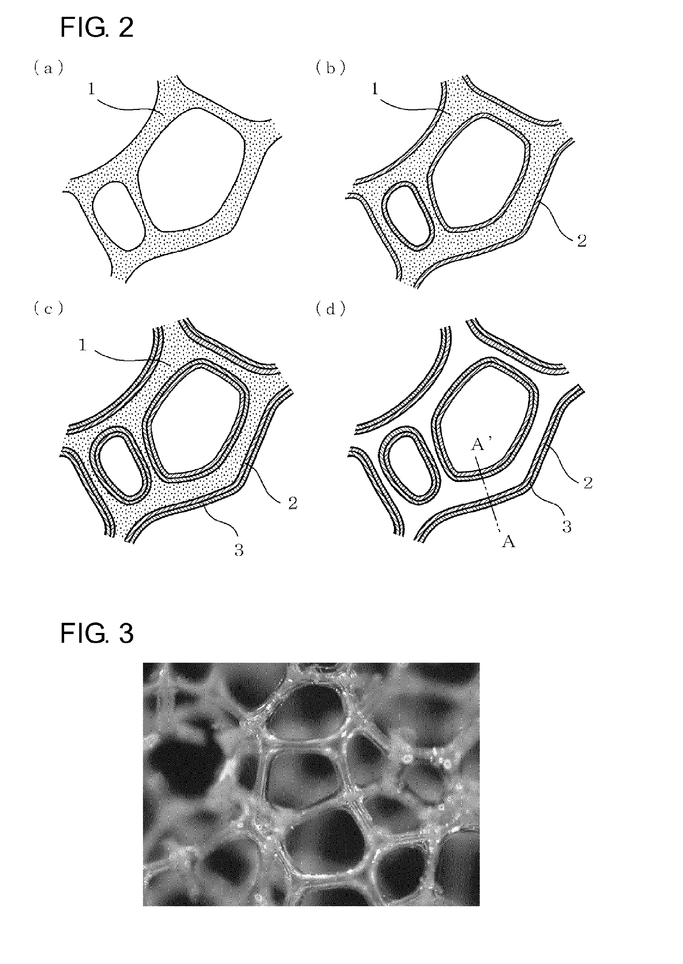

Figure 1 is a flow chart of a process of producing an aluminum structural body according to the present invention. Figure 2 shows schematic views of the formation of aluminum structural body using a resin molded body as a core material in accordance with the flow chart. The general flow of the producing process will be described below with reference to these figures. First, the preparation of a base resin molded body 101 is performed. Figure 2(a) is an enlarged schematic view of a portion of a cross-section of a resin, which is the magnification of a surface of a resin expansion molded body having continuous pores serving as an example of a base resin molded body. Pores are formed in the skeleton of a resin expansion molded body 1. The conductive treatment of the surface of the resin molded body 102 is then performed. As illustrated in Fig. 2(b), through this process, a thin electrically conductive layer 2 made of aluminum is formed on the surface of the resin molded body 1. Aluminum plating in a molten salt 103 is then performed to form an aluminum plated layer 3 on the surface of the electrically conductive layer of the resin molded body (Fig. 2(c)). Thus, an aluminum structural body is produced in which the aluminum plated layer 3 is formed on a surface of a base resin molded body serving as the base material. Removal of the base resin molded body 104 may be further performed. The resin expansion molded body 1 can be evaporated by decomposition to form an aluminum structural body (porous body) containing only the metal layer (Fig. 2(d)). These processes will be described below process by process.

(Preparation of Porous Resin Molded Body)

A porous resin molded body having a three-dimensional network structure and continuous pores is prepared. The material of the porous resin molded body may be any resin. The material may be exemplified by a resin expansion molded body made of polyurethane, melamine, polypropylene, or polyethylene. The resin expansion molded body may be a resin molded body having any shape provided that the resin molded body has contiguous pores (continuous pores). For example, a nonwoven fabric containing tangled fibrous resin may be used in place of the resin expansion molded body. Preferably, the resin expansion molded body has a porosity in the range of 80% to 98% and a pore size in the range of 50 to 500 $\mu$m. Urethane foams and melamine foams have a high porosity, continuous pores, and an excellent pyrolysis property and are therefore suitable for the resin expansion molded body. Urethane foams are preferred in terms of the uniformity of pores and availability. Urethane foams are preferred because of their small pore size.

Porous resin molded bodies often contain residue materials, such as a foaming agent and an unreacted monomer in the produce of the foam, and are therefore preferably subjected to washing treatment before the subsequent processes. As an example of the porous resin molded body, Fig. 3 illustrates a urethane foam subjected to a washing treatment as a preliminary treatment. The resin molded body has a three-dimensional network skeleton, which includes generally contiguous pores. The skeleton of the urethane foam has an almost triangular section perpendicular to the lateral direction. The porosity is defined by the following equation:

$$\text{Porosity} = (1 - (\text{the weight of porous body [g]}/(\text{the volume of porous body [cm}^3]\ \times\ \text{material density)})) \times 100\ [\%]$$

The pore size is determined by magnifying a surface of the resin molded body in a photomicrograph or the like, counting the number of cells per inch (25.4 mm), and calculating the average pore size by the following equation: average pore size = 25.4 mm/the number of cells.

(Conductive Treatment of Resin Molded Body Surface: Gas Phase Method)

An electrically conductive layer made of aluminum is formed on the surface of a resin expansion molded body. The electrically conductive layer may be formed by any method, for example, a gas phase method, such as vapor deposition, sputtering, or plasma chemical vapor deposition (CVD), or application of an aluminum paint. A vapor deposition method is preferred because a thin film can be uniformly formed. Preferably, the electrically conductive layer has a thickness in the range of 0.05 to 1 $\mu$m, preferably 0.1 to 0.5 $\mu$m When the electrically conductive layer has a thickness of less than 0.01 $\mu$m, conductive treatment is insufficient, and electrolytic plating cannot be properly performed in the next process. A thickness of more than 1 $\mu$m results in an increase in the cost of the electrical conduction treatment.

(Conductive Treatment of Resin Molded Body Surface: Coating Material)

The conductive treatment may be performed by dipping a resin expansion molded body in a coating material containing aluminum. The aluminum component in the coating material is deposited on the surface of the resin expansion molded body to form an electrically conductive layer made of aluminum, producing an electrically conductive state that allows plating in a molten salt. The coating material containing aluminum may be a liquid containing aluminum fine particles having a particle diameter in the range of 10 nm to 1 $\mu$m dispersed in water or an organic solvent. The resin foam can be dipped in the coating material and heated to evaporate the solvent to form the electrically conductive layer.

(Pretreatment for Plating: Anode Electrolysis)

Aluminum is plated by molten salt plating on the electrically conductive layer formed by the process described above to form an aluminum plated layer. The presence of an oxide film on the surface of the electrically conductive layer may result in a poor adhesive property of aluminum in the next plating process, resulting in the deposition of island-shaped aluminum or variations in the thickness of the aluminum plated layer. Thus, an anode electrolysis treatment is preferably performed before the plating process to dissolve and remove an oxide film (aluminum oxide layer) formed on the electrically conductive layer (aluminum layer). More specifically, while a resin molded body subjected to conductive treatment and a counter electrode, such as an aluminum sheet, is dipped in a molten salt, a direct current is applied between the resin molded body subjected to conductive treatment (an electrically conductive layer) functioning as an anode and the counter electrode functioning as a cathode. The molten salt may be the same as or different from the molten salt used in the next molten salt plating process.

(Pretreatment for Plating: Non-oxidizing atmosphere)

In accordance with another method for preventing the oxidation of an electrically conductive layer (aluminum layer), after the electrically conductive layer has been formed, a resin molded body having the electrically conductive layer (a resin molded body subjected to conductive treatment) is transported to the next plating process without being exposed to an oxidizing atmosphere. For example, a vapor deposition apparatus and a molten salt plating apparatus are placed in an argon atmosphere. After an electrical conduction treatment utilizing vapor deposition is performed in an argon atmosphere, the sample is transported in an argon atmosphere to the next process, in which molten salt plating is performed. Thus, the surface of the electrically conductive layer formed in the electrical conduction treatment can be plated without oxidation.

(Formation of Aluminum Layer: Molten Salt Plating)

The aluminum plated layer 3 is then formed on the surface of the resin molded body by electrolytic plating in a molten salt. A direct current is applied between a cathode of the resin molded body having a surface subjected to conductive treatment and an anode of a 99.99% aluminum plate in a molten salt. The aluminum plated layer has a thickness in the range of 1 to 100 $\mu$m, preferably 5 to 20 $\mu$m. In contrast to the anode electrolysis treatment, a direct current is applied between a cathode of the resin molded body subjected to conductive treatment and an anode of the counter electrode in a molten salt. The molten salt may be an organic molten salt that is an eutectic salt of an organic halide and an aluminum halogenide or an inorganic molten salt that is an eutectic salt of an alkaline metal halide and an aluminum halogenide. Use of a bath of an organic molten salt that can melt at a relatively low temperature is preferred because it allows plating without the decomposition of the base material, a resin molded body. The organic halide may be an imidazolium salt or a pyridinium salt. Among others, 1-ethyl-3-methylimidazolium chloride (EMIC) and butylpyridinium chloride (BPC) are preferred. The imidazolium salt is preferably a salt that contains an imidazolium cation having alkyl groups at 1,3-position. In particular, aluminum chloride and 1-ethyl-3-methylimidazolium chloride ($AlCl_3$-EMIC) molten salts are most preferred because of their high stability and resistance to decomposition.
The contamination of a molten salt by water or oxygen causes a deterioration of the molten salt. Thus, plating is preferably performed in an atmosphere of an inert gas, such as nitrogen or argon, in a sealed environment. When an EMIC bath is used as the organic molten salt bath, the temperature of the plating bath ranges from 10°C to 60°C, preferably 25°C to 45°C.

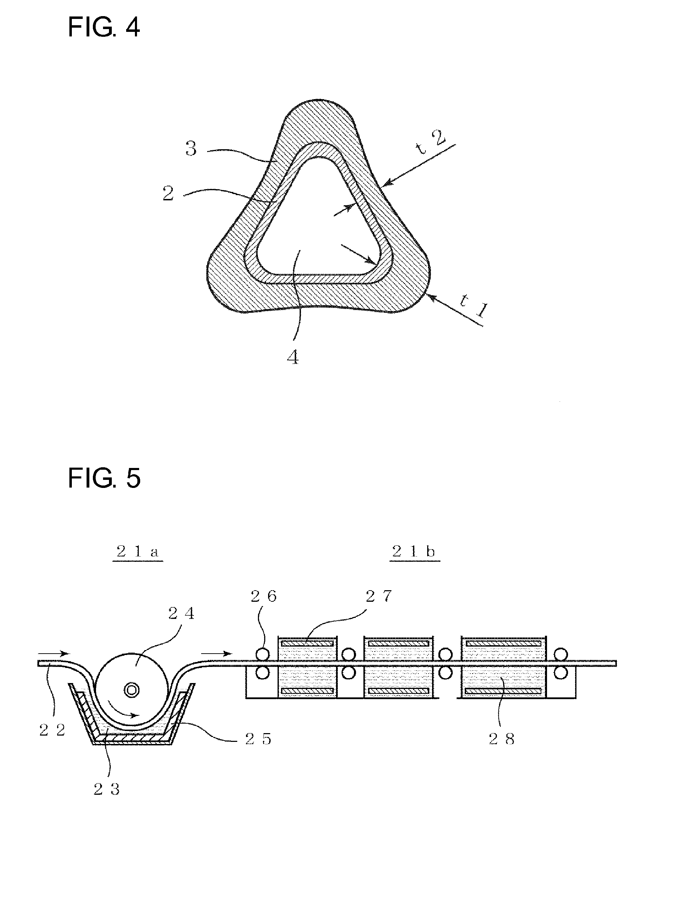

Figure 5 is a schematic view of an apparatus for continuously performing a metal plating treatment of a strip of resin. A strip of resin 22 having a surface subjected to conductive treatment is transferred from the left to the right in the figure. A first plating bath 21a includes a cylindrical electrode 24, a positive electrode 25 disposed on the inner wall of a container, and a plating bath 23. The strip of resin 22 passes through the plating bath 23 along the cylindrical electrode 24. Thus, a uniform electric current can easily flow through the entire resin, achieving uniform plating. A plating bath 21b for performing thick uniform plating is composed of a plurality of baths so that plating can be performed multiple times. The strip of resin 22 having a thin metal bath on a surface thereof is transferred by electrode rollers 26, which function as feed rollers and power feeding cathodes on the outside of container, through a plating bath 28 to perform plating. The plurality of baths include positive electrodes 27 facing both faces of the resin via the plating bath 28, allowing more uniform plating on both faces of the resin.
An aluminum structural body (porous aluminum) having a resin molded body as the core of its skeleton is produced through these processes. Depending on the application, such as a filter or a catalyst support, the aluminum structural body may be directly used as a resin-metal composite. In order to use a metal structure without resin because of constraints resulting from the usage environment, the resin may be removed. The resin may be removed by decomposition (dissolution) with an organic solvent, a molten salt, or supercritical water, decomposition by heating, or any other method. Decomposition by heating at high temperature is convenient but causes the oxidation of aluminum. Unlike nickel, once oxidized, aluminum is difficult to reduce. Thus, for use in an electrode material for batteries, aluminum cannot be used because its conductive property is lost by oxidation. In order to prevent the oxidation of aluminum, therefore, a method for removing a resin by decomposition by heating in a molten salt as described below is preferably used.

(Removal of Resin: Decomposition by Heating in Molten Salt)

Decomposition by heating in a molten salt is performed in the following manner. A resin expansion molded body having an aluminum plated layer on a surface thereof is dipped in a molten salt. The resin expansion molded body is decomposed by heating while a negative potential is applied to the aluminum layer. The application of the negative potential while dipping the resin expansion molded body in the molten salt can prevent the oxidation of aluminum. Heating under such conditions allows the decomposition of the resin expansion molded body without the oxidation of aluminum. The heating temperature can be appropriately determined in accordance with the type of the resin expansion molded body. The heating temperature must be lower than the melting point (660°C) of aluminum so as not to melt aluminum. A preferred temperature range is 500°C or more and 600°C or less. A negative potential to be applied is on the minus side of the reduction potential of aluminum and on the plus side of the reduction potential of the cation in a molten salt.

The molten salt used in the decomposition of a resin by heating may be an alkaline metal or alkaline earth metal halide salt such that the aluminum electrode potential is less-noble. More specifically, a preferred molten salt contains one or more selected from the group consisting of lithium chloride (LiCl), potassium chloride (KCl), sodium chloride (NaCl), and aluminum chloride ($AlCl_3$). Removal of the resin by such a method can result in porous aluminum having a thin oxide layer on a surface thereof (a low oxygen content) and a low carbon content.

Figure 4 is a schematic view of a cross-section taken along the line A-A' in Fig. 2(d). An aluminum layer composed of the electrically conductive layer 2 and the aluminum plated layer 3 has a tubular skeleton structure. A cavity 4 in the skeleton structure has almost triangular sections. The thickness (t1) of the aluminum layer at the vertexes of each of the triangular sections is greater than the thickness (t2) of the aluminum layer at the middle of each side of the triangular sections. This is probably because an electric field is concentrated at the corners (the vertexes of a triangular section) in the formation of the aluminum layer by plating. Thus, in an aluminum structural body produced by a method according to the present invention, the skeleton structure has almost triangular sections, and the aluminum layer has a larger thickness at the vertexes of each of the triangular sections than at the middle of each of the triangular sections.

(Lithium-Ion Battery)

A battery electrode material and a battery each including porous aluminum will be described below. When porous aluminum is used in a positive electrode of a lithium-ion battery, the active material may be lithium cobalt oxide ($LiCoO_2$) lithium manganese oxide ($LiMn_2O_4$), or lithium nickel dioxide ($LiNiO_2$). The active material is used in combination with a conduction aid and a binder. In a known positive electrode material for lithium-ion batteries, an active material is applied to the surface of aluminum foil. In order to increase the battery capacity per unit area, the application thickness of the active material is increased. In order to effectively utilize the active material, the active material must be in electrical contact with the aluminum foil. Thus, the active material is mixed with a conduction aid. Porous aluminum according to the present invention has a high porosity and a large surface area per unit area. Thus, even a thin layer of the active material on the surface of the porous aluminum can effectively utilize the active material, increasing the battery capacity and decreasing the amount of conduction aid to be mixed with. Lithium-ion batteries include the positive electrode material described above as the positive electrode, graphite as the negative electrode, and an organic electrolyte as the electrolyte. Such lithium-ion batteries can have an increased capacity even with a small electrode area and accordingly have a higher energy density than conventional lithium-ion batteries.

(Molten Salt Battery)

The porous aluminum can also be used as an electrode material for molten salt batteries. When the porous aluminum is used as a positive electrode material, the active material is a metal compound, such as sodium chromite ($NaCrO_2$) or titanium disulfide ($TiS_2$), into which a cation of a molten salt serving as an electrolyte can be intercalated. The active material is used in combination with a conduction aid and a binder. The conduction aid may be acetylene black. The binder may be polytetrafluoroethylene (PTFE). For the active material of sodium chromate and the conduction aid of acetylene black, the binder is preferably PTFE because PTFE can tightly bind sodium chromate and acetylene black.

The porous aluminum can also be used as a negative electrode material for molten salt batteries. When the porous aluminum is used as a negative electrode material, the active material may be sodium alone, an alloy of sodium and another metal, or carbon. Sodium has a melting point of approximately 98°C and becomes softer with an increase in temperature. Thus, it is preferable to alloy sodium with another metal (such as Si, Sn, or In). In particular, an alloy of sodium and Sn is preferred because of its excellent handleability. Sodium or a sodium alloy can be supported on the surface of the porous aluminum by electroplating, hot dipping, or another method. Alternatively, a metal (such as Si) to be alloyed with sodium may be deposited on the porous aluminum by plating and converted into a sodium alloy by charging the molten salt battery.

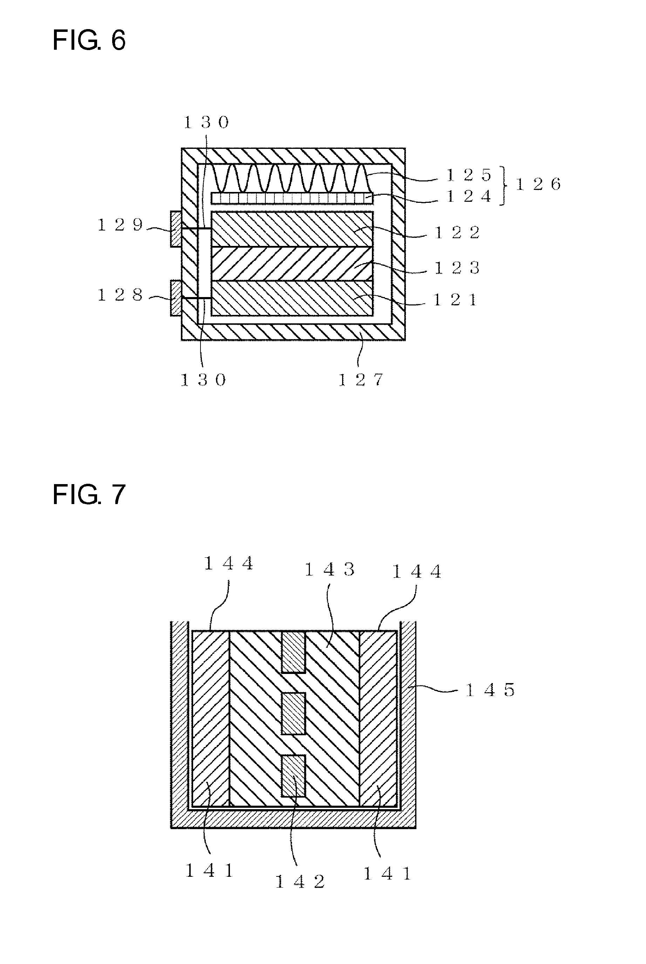

Figure 6 is a schematic cross-sectional view of a molten salt battery produced by using the battery electrode material described above. The molten salt battery includes a positive electrode 121, in which a positive electrode active material is supported on the surface of the aluminum skeleton of porous aluminum, a negative electrode 122, in which a negative electrode active material is supported on the surface of the aluminum skeleton of porous aluminum, and a separator 123 impregnated with a molten salt electrolyte, in a case 127. A pressing member 126 is disposed between the top surface of the case 127 and the negative electrode. The pressing member 126 includes a presser plate 124 and a spring 125 for pressing the presser plate. The pressing member can uniformly press the positive electrode 121, the negative electrode 122, and the separator 123 into contact with one another even when the volumes of them have changed. A collector (porous aluminum) of the positive electrode 121 and a collector (porous aluminum) of the negative electrode 122 are connected to a positive electrode terminal 128 and a negative electrode terminal 129, respectively, through a lead wire 130.

The molten salt serving as an electrolyte may be an inorganic salt or an organic salt that can melt at the operating temperature. The cation of the molten salt may be one or more selected from alkaline metals, such as lithium (Li), sodium (Na), potassium (K), rubidium (Rb), and cesium (Cs), and alkaline earth metals, such as beryllium (Be), magnesium (Mg), calcium (Ca), strontium (Sr), and barium (Ba).

In order to decrease the melting point of the molten salt, it is preferable to use a mixture of at least two salts. For example, use of potassium bis(fluorosulfonyl)amide (KFSA) and sodium bis(fluorosulfonyl)amide (NaFSA) in combination can decrease the battery operating temperature to 90°C or less.

The molten salt is used in the form of a separator impregnated with the molten salt. The separator prevents the contact between the positive electrode and the negative electrode and may be a glass nonwoven fabric or porous resin. A laminate of the positive electrode, the negative electrode, and the separator impregnated with the molten salt housed in a case is used as a battery.

(Electrical Double Layer Capacitor)

The porous aluminum can also be used as an electrode material for electrical double layer capacitors. When the porous aluminum is used as an electrode material for an electrical double layer capacitor, the electrode active material may be activated carbon. The activated carbon is used in combination with a conduction aid and a binder. The conduction aid may be graphite or carbon nano-tube. The binder may be polytetrafluoroethylene (PTFE) or styrene-butadiene rubber.

Figure 7 is a schematic cross-sectional view of an electrical double layer capacitor produced by using the electrode material for an electrical double layer capacitor. A polarizable electrode 141 is disposed in an organic electrolyte 143 partitioned with a separator 142. The polarizable electrode 141 is made of an electrode material, which is an electrode active material supported on the porous aluminum. The electrode material 141 is connected to a lead wire 144. All the components are housed in a case 145. Use of the porous aluminum as a collector can increase the surface area of the collector. Thus, even a thin layer of activated carbon as the active material on the surface of the porous aluminum can result in an electrical double layer capacitor with a high power and a high capacity.

Although the resin expansion molded body is used as the resin molded body as described above, the present invention is not limited to the resin expansion molded body. A resin molded body having any shape can be used to produce an aluminum structural body having a desired shape.

(Example: Produce of Porous Aluminum: Formation of Aluminum Layer by Vapor Deposition Method)

An example of the produce of porous aluminum will be specifically described below. A urethane foam having a thickness of 1 mm, a porosity of 95%, and approximately 20 pores per centimeter was prepared as a resin expansion molded body and was cut into a 10 mm x 30 m square. Vapor deposition of aluminum on the surface of the urethane foam was performed to form an electrically conductive layer having a thickness of approximately 0.3 $\mu$m.

(Anode Electrolysis)

The urethane foam having an electrically conductive layer on the surface thereof was mounted in a jig having an electricity supply function and was then dipped in a molten salt aluminum plating bath (67% by mole $AlCl_3$-33% by mole EMIC) at a temperature of 40°C. The jig holding the urethane foam was connected to the anode of a rectifier, and an aluminum plate (purity 99.99%) of the counter electrode was connected to the cathode. A direct current having a current density of 1 A/dm$^2$ was applied for one minute to perform anode electrolysis. The calculation of the current density was based on the apparent area of the porous aluminum.

(Molten Salt Plating)

While the urethane foam having an electrically conductive layer on the surface thereof was dipped in the molten salt aluminum plating bath, the anode and the cathode of the rectifier was switched therebetween. A direct current was then applied to the urethane foam at a current density of 3.6 A/dm$^2$ at a temperature of 40°C for 90 minutes to perform aluminum plating.

(Produce of Porous Aluminum: Decomposition of Resin Expansion Molded Body)

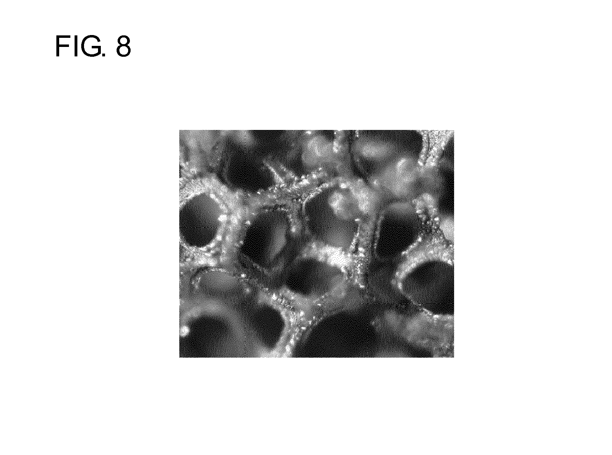

The resin foam having the aluminum plated layer was dipped in a LiCl-KCl eutectic molten salt at a temperature of 500°C. A negative potential of -1 V was applied to the resin foam for 30 minutes. Air bubbles were generated in the molten salt, indicating the decomposition reaction of the polyurethane. The product was cooled to room temperature in the atmosphere and was washed with water to remove the molten salt, thus forming porous aluminum. The amount of aluminum deposit was 150 g/m$^2$. Figure 8 is a scanning electron microscope (SEM) photograph of the porous aluminum.

The porous aluminum was dissolved in nitromuriatic acid and was subjected to an inductively-coupled plasma emission spectrometer. The aluminum purity was 99.1 % by mass. The carbon content was 0.8% by mass as measured by an infrared absorption method after combustion in a high-frequency induction furnace in accordance with Japan Industrial Standard G1211. The energy dispersive X-ray spectroscopy (EDX) of the surface at an accelerating voltage of 15 kV showed a negligible oxygen peak, indicating that the oxygen content of the porous aluminum was lower than the detection limit of EDX (3.1 % by mass).

(Evaluation of Porous Aluminum in Battery)

The practical evaluation of porous aluminum used as a battery electrode will be described below in comparison with a conventional structure having an aluminum foil electrode.

A positive electrode active material LiCoO$_2$ having an average particle diameter of 7 $\mu$m, a conduction aid carbon black, and a binder resin polyvinylidene fluoride were mixed at 10:1:1 (mass ratio). A solvent N-methyl-2-pyrrolidone was added to the mixture to prepare a paste. Porous aluminum having a three-dimensional network structure and a porosity of approximately 95% was filled with the paste, was dried under vacuum at 150°C, and was role-pressed to a thickness corresponding to 70% of the initial thickness to form a battery electrode material (positive electrode). The battery electrode material was punched in a diameter of 10 mm and was fixed to a coin battery container made of stainless steel SUS304 by spot welding. The positive electrode filling capacity was 2.4 mAh.

For comparison purposes, the mixture paste of LiCoO$_2$, carbon black, and polyvinylidene fluoride was applied to aluminum foil having a thickness of 20 $\mu$m and was dried and role-pressed in the same manner as described above to prepare a battery electrode material (positive electrode). The battery electrode material was punched in a diameter of 10 mm and was fixed to a coin battery container made of stainless steel SUS304 by spot welding. The positive electrode filling capacity was 0.24 mAh.

A polypropylene porous film having a thickness of 25 $\mu$m was used as a separator. A solution of 1 M LiPF$_6$ in ethylene carbonate (EC)/diethyl carbonate (DEC) (volume ratio 1:1) was dropped at 0.1 ml/cm$^2$ on the separator, which was then subjected to vacuum impregnation. A lithium aluminum foil having a thickness of 20 $\mu$m and a diameter of 11 mm was fixed to the top lid of a coin battery container as a negative electrode. The battery electrode material (positive electrode), the separator, and the negative electrode were laminated in this order and were caulked with a Viton (registered trademark) o-ring placed between the top lid and the bottom lid to produce a battery. In deep discharge, the upper limit voltage was 4.2 V, and the lower limit voltage was 3.0 V. Charging to the positive electrode filling capacity was followed by discharging at each discharge rate. The lithium secondary battery containing the porous aluminum as the positive electrode material had a capacity approximately five times the capacity of a conventional battery containing aluminum foil as the electrode material at 0.2 C.

The above description includes the following characteristics.

(Additional Entry 1)

A method for producing an aluminum structural body, including an electrical conduction treatment of forming an electrically conductive layer made of aluminum on a surface of a resin molded body and a plating process of plating the resin molded body subjected to the electrical conduction treatment with aluminum in a first molten salt bath, wherein while the resin molded body having the aluminum plated layer is dipped in a second molten salt and while a negative potential is applied to the aluminum plated layer, the resin molded body is heated to a temperature of the melting point of aluminum or less to decompose the resin molded body.

(Additional Entry 2)

The method for producing porous aluminum according to Additional Entry 1, wherein the resin molded body is a resin expansion molded body having contiguous pores.

(Additional Entry 3)

An electrode material in which an active material is supported on an aluminum surface of an aluminum structural body according to the present invention.

(Additional Entry 4)

A battery containing the electrode material according to Additional Entry 3 in one or both of the positive electrode and the negative electrode.

(Additional Entry 5)

An electrical double layer capacitor containing the electrode material according to Additional Entry 3 as an electrode.

(Additional Entry 6)

A filtration filter including an aluminum structural body according to the present invention.

(Additional Entry 7)

A catalyst support in which a catalyst is supported on the surface of an aluminum structural body according to the present invention.

Industrial Applicability

The present invention can provide a structure in which a surface of a resin molded body is plated with aluminum and an aluminum structural body produced by removing the resin molded body from the structure. Thus, the present invention can be widely applied as porous aluminum to cases where the characteristics of aluminum can be exploited, for example, in electric materials, such as battery electrodes, various filters for filtration, and catalyst supports.

Reference Signs List

| | |
|---|---|
| 1 | Resin foam |
| 2 | Electrically conductive layer |
| 3 | Aluminum plated layer |
| 4 | Cavity |
| 21a, 21b | Plating bath |
| 22 | Strip of resin |
| 23, 28 | Plating bath |
| 24 | Cylindrical electrode |
| 25, 27 | Positive electrode |
| 26 | Electrode roller |
| 121 | Positive electrode |
| 122 | Negative electrode |
| 123 | Separator |
| 124 | Presser plate |
| 125 | Spring |
| 126 | Pressing member |
| 127 | Case |
| 128 | Positive electrode terminal |

| 129 | Negative electrode terminal |
| 130 | Lead wire |
| 141 | Polarizable electrode |
| 142 | Separator |
| 143 | Organic electrolyte |
| 144 | Lead wire |
| 145 | Case |

**Claims**

1. A method for producing an aluminum structural body, comprising: an electrical conduction treatment of forming an electrically conductive layer made of aluminum on a surface of a resin molded body; and a plating process of plating the resin molded body subjected to the electrical conduction treatment with aluminum in a molten salt bath.

2. The method for producing an aluminum structural body according to Claim 1, further comprising an anode electrolysis process of performing electrolysis treatment using the electrically conductive layer as an anode between the electrical conduction treatment and the plating process.

3. The method for producing an aluminum structural body according to Claim 1, wherein the resin subjected to the electrical conduction treatment is transported between the electrical conduction treatment and the plating process without being exposed to an oxidizing atmosphere.

4. The method for producing an aluminum structural body according to any one of Claims 1 to 3, wherein the electrical conduction treatment is a process of depositing aluminum on the surface of the resin molded body by a gas phase method.

5. The method for producing an aluminum structural body according to any one of Claims 1 to 3, wherein the electrical conduction treatment is a process of dipping the resin molded body in a coating material containing aluminum to deposit aluminum on the resin surface.

6. The method for producing an aluminum structural body according to any one of Claims 1 to 5, wherein the resin molded body is a porous resin article having a three-dimensional network structure.

7. The method for producing an aluminum structural body according to any one of Claims 1 to 6, wherein the resin molded body is made of urethane or melamine.

8. The method for producing an aluminum structural body according to any one of Claims 1 to 7, further comprising a process of removing the resin molded body after the plating process.

9. An aluminum structural body produced by the method according to any one of Claims 1 to 8.

10. An aluminum structural body, comprising an aluminum layer having a thickness in the range of 1 to 100 $\mu$m as a metal layer, wherein the metal layer has an aluminum purity of 99.0% or more and a carbon content of 1.0% or less and contains inevitable impurities as the balance.

11. The aluminum structural body according to Claim 10, further comprising a resin molded body, on which the metal layer is disposed.

12. The aluminum structural body according to Claim 10 or 11, wherein the aluminum layer has a tubular skeleton structure and forms a porous body having generally contiguous pores.

13. The aluminum structural body according to Claim 12, wherein the skeleton structure has almost triangular sections, and the aluminum layer has a larger thickness at the vertexes of each of the triangular sections than at the middle of each side of the triangular sections.

FIG. 1

```
┌──────────────────────────┐
│      PREPARATION         │ ⌇ 1 0 1
│     OF BASE RESIN        │
└──────────────────────────┘
             │
┌──────────────────────────┐
│  ELECTRICAL CONDUCTION   │
│       TREATMENT          │ ⌇ 1 0 2
│   OF RESIN SURFACE       │
└──────────────────────────┘
             │
┌──────────────────────────┐
│   ALUMINUM PLATING       │ ⌇ 1 0 3
│    IN MOLTEN SALT        │
└──────────────────────────┘
             │
┌──────────────────────────┐
│       REMOVAL            │ ⌇ 1 0 4
│    OF BASE RESIN         │
└──────────────────────────┘
```

FIG. 2

(a)

(b)

(c)

(d)

FIG. 3

FIG. 4

FIG. 5

FIG. 6

FIG. 7

FIG. 8

## INTERNATIONAL SEARCH REPORT

International application No.

PCT/JP2011/058782

### A. CLASSIFICATION OF SUBJECT MATTER
*C22C1/08*(2006.01)i, *C22C21/00*(2006.01)i, *C25D5/56*(2006.01)i, *H01G9/016*
(2006.01)n, *H01M4/66*(2006.01)n, *H01M4/80*(2006.01)n

According to International Patent Classification (IPC) or to both national classification and IPC

### B. FIELDS SEARCHED
Minimum documentation searched (classification system followed by classification symbols)
C22C1/08, C22C21/00, C25D5/56, H01G9/016, H01M4/66, H01M4/80

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 04-002795 A (Sumitomo Electric Industries, Ltd.), 07 January 1992 (07.01.1992), claims (Family: none) | 1-13 |
| Y | JP 06-122994 A (Nisshinbo Industries, Inc.), 06 May 1994 (06.05.1994), claims (Family: none) | 1-13 |
| Y | JP 04-341594 A (Eagle Kogyo Co., Ltd.), 27 November 1992 (27.11.1992), claims; paragraph [0009] (Family: none) | 1-13 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 July, 2011 (05.07.11) | 19 July, 2011 (19.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/058782 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 05-271986 A  (Mitsubishi Petrochemical Co., Ltd.),<br>19 October 1993 (19.10.1993),<br>claims; paragraph [0016]<br>(Family: none) | 1-13 |
| Y | JP 60-253157 A  (Asahi Chemical Industry Co., Ltd.),<br>13 December 1985 (13.12.1985),<br>claims<br>(Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3413662 B
- JP 8170126 A
- JP 3202072 B